# EUROPEAN PATENT SPECIFICATION

(11) **EP 1 601 141 B1**
(45) Date of publication and mention of the grant of the patent: **25.03.2009**
(21) Application number: 05076867.0
(22) Date of filing: 09.02.2001
(51) Int. Cl.: H04L 12/56, H04W 84/04

(54) **Interworking in a communication system**
Zusammenwirken in einem Kommunikationssystem
Interfonctionnement dans un système de communication

(30) Priority: 06.03.2000 GB 0005363
(43) Date of publication of application: 30.11.2005
(62) Divisional of application: 01909731.0
(73) Proprietor: Nokia Corporation, 02150 Espoo (FI)
(72) Inventor: Greis, Marc, Irving, Texas 75063 (US)
(74) Representative: Ruuskanen, Juha-Pekka

(56) References cited:
- EP-A- 0 917 390
- WO-A-99/05828
- WO-A-99/33301
- TERZIS A, KRAWCZYK J, WROCLAWSKI J, ZHANG L: "RSVP Operation Over Ip Tunnels" RFC 2746 (REQUEST FOR COMMENT), [Online] 1 January 2000 (2000-01-01), pages 1-22, XP002139061 Internet Engineering Task Force (IETF) Retrieved from the Internet: URL:http://sunsite.hr/cgi-bin/rfc/rfc2746. txt> [retrieved on 2000-05-29]

## Description

### Field of the Invention

The present invention relates to interworking between different functions of a telecommunications system.

### Background of the Invention

Telecommunications networks typically operate in accordance with a given standard or specification which sets out what the various elements of the network are permitted to do and how that should be achieved. For example, the standard or specification may define whether the user, or more precisely, user equipment or terminal is provided with circuit switched or packet switched service. The standard or specification may also define the communication protocols and/or parameters which shall be used for the connection. In other words, the standards and/or specifications define the "rules" on which the communication within a communication system can be based on. Examples of the different standards and/or specifications include, without limiting to these, specifications such as GSM (Global System for Mobile communications) or various GSM based systems (such as GPRS: General Packet Radio Service), AMPS (American Mobile Phone System), DAMPS (Digital AMPS), WCDMA (Wideband Code Division Multiple Access) or TD/CDMA in UMTS (Time Division / Code Division Multiple Access in Universal Mobile Telecommunications System), IMT 2000 and so on.

In a cellular communication system a base station serves mobile stations or similar terminal apparatus (mobile station MS in the GSM, User Equipment UE in the UMTS) via a wireless interface. Each of the cells of the cellular system can be served by an appropriate transceiver apparatus. For example, in the WCDMA radio access network the cell is served by Node B, which is connected to and controlled by an element called as a radio network controller (RNC) node. In the GSM radio network the cell is served by a base station (BTS), which is connected to and controlled by a base station controller (BSC) node. The BSC/RNC element may be connected to and controlled by a mobile switching center (MSC) or similar facility. The BSC/RNC may also be connected to and controlled by a serving GPRS support node (SGSN). The MSCs of a network are typically interconnected and there may be one or more Gateway MSC (GMSC) for connecting the cellular network to other telecommunication networks. The SGSN may be connected to a Gateway GPRS support node (GGSN) for connecting the mobile network to the Internet and other packet switched networks.

Thus, although the mobile station may be in communication via only one controller and/or gateway node at the time, it may also communicate via several different nodes. The nodes the mobile station is connected with may also be configured and operated based on different standards and/or specifications. The differences in the standards and/or specifications may cause difficulties with respect to the interworking of the various elements of the different network systems. The following will describe an example of the possible incompability problem in the context of Quality of Service (QoS) signaling between the different elements and protocols of a communication system comprising one or more packet switched UMTS/GPRS networks.

The General Packet Radio Service GPRS relates to the transfer of data to and from mobile stations. Typically, the GPRS standard is provided in conjunction with the Global System for Mobile communications GSM standard. The GSM standard is a circuit switched service and is originally designed for speech services. There are elements of the GSM standard and the GPRS standard which are in common. The GPRS networks are described in more detail e.g. in 3GPP Technical Specification 3G TS 23.060 version 3.2.0, "General Packet Radio Service (GPRS); Service description; Stage 2", January 2000. An adaptation of the GPRS standard is also being proposed for use with the third generation standard UMTS, which typically uses code division multiple access. The packet data part of the UMTS is contained in the above referenced 23.060 specification, i.e. 23.060 applies for packet switched data both for the UMTS and the GPRS.

To negotiate an end-to-end QoS between terminals in UMTS/GRPS networks and terminals in other data networks such as the IP (Internet Protocol) or X.25 based networks, a conventional fixed IP network, or another UMTS/GPRS network, a protocol such as Resource Reservation Protocol RSVP may be used.

However, the inventor has found that in the current interworking between the RSVP QoS signaling and the UMTS/GPRS QoS mechanisms (i.e. so called PDPcontext activation) the RSVP messages do not carry enough QoS information to determine the full set of UMTS/GPRS QoS parameters from these messages. More particularly, the RSVP PATH message carries QoS information in a "SENDER_TSPEC" object. The "SENDER_TSPEC" object contains only the following QoS parameters: 'Token Bucket Rate', 'Token Bucket Size', 'Peak Data Rate', 'Minimum Policed Unit', 'Maximum Packet Size'. Said UMTS/GPRS QoS and Architecture", October 1999. A more detailed description of the RSVP PATH message can be found e.g. from document by Braden, R., et al, "Resource Reservation Protocol (RSVP)Version 1 Functional Specification", IETF RFC 2205, September 1997. The "SENDER_TSPEC" object is defined e.g. by Wroclawski, J. in document "The Use of RSVP with IETF Integrated Services", IETF RFC 2210, September 1997.

It is not possible for a network element within a UMTS network to determine essential UMTS QoS parameters like 'Traffic Class' and 'Transfer Delay' alone from the QoS parameters contained in this SENDER_TSPEC object.

The RSVP RESV message may carry an additional "RSPEC" (within a "FLOWSPEC" object) containing a rate and a slack term, which may be used to derive the 'Transfer Delay' parameter. However, the mapping may be problematic since the RSPEC (like all other RSVP QoS parameters) is meant to be used for end-to-end QoS while the UMTS Transfer Delay parameter only defines the delay within the UMTS network. In addition, the RSPEC applies to queuing delay, while in the UMTS/GPRS QoS specifies transfer delay.

The UMTS QoS parameters and the RSVP QoS parameters as contained in a FLOWSPEC object and a possible mapping between these parameters are shown in Table 1. This table shows the UMTS specific QoS parameters which can not be derived from the RSVP QoS parameters.

**Table 1: UMTS and RSVP QoS Parameters**

| **UMTS Attributes** | **RSVP Parameters** |
|---|---|
| Traffic Class | Service Class? |
| Maximum Bitrate | Peak Data Rate |
| Guaranteed Bitrate | Token Bucket Rate |
| Maximum SDU Size | Maximum Packet Size |
| Delivery Order | - |
| SDU Format Information | - |
| SDU Error Ratio | - |
| Residual Bit Error Ratio | - |
| Delivery of Erroneous SDUs | - |
| Transfer Delay | - |
| Traffic Handling Priority | - |
| Allocation/Retention Priority | - |
| - | Token Bucket Size |
| - | Rspec (Rate/Slack Term) |
| - | Minimum Policed Unit |

It also has to be noted that there are only three RSVP/IntServ service classes (Best Effort, Controlled Load, Guaranteed Service), but four UMTS service classes (Conversational, Streaming, Interactive, Background) which complicates further the mapping between these two parameters.

EP 917,390 discloses a method and a network architecture for mapping Internetworking Protocol (IP) multicast and Integrated Services (i.e. differing levels of quality of service) over asynchronous transfer mode (ATM) networks, based upon multicast switches, allowing IP/resource reservation protocol (RSVP) applications running on ATM hosts to seamlessly participate in Internet-wide multicast sessions.

### Summary of the Invention

It is an aim of the embodiments of the present invention to address one or several of the above problems.
According to one aspect, there is provided a method for a communication system comprising generating a control message that can be interpreted by at least one element of a first subsystem and at least one element of a second subsystem, adding to the control message an object containing control information that is transparent for the elements of the second subsystem, transmitting the control message via the first and second subsystems, controlling the operation of at least one element of the communication system based on the control information contained in the object, wherein the second subsystem comprises a data network that is based on a packet switched communication protocol that is different from the communication protocol used by the first subsystem.

The first subsystem may comprise a packet switched network providing wireless services for the users thereof. The second subsystem may also comprises a data network that is based on a packet switched communication protocol that is different from the communication protocol used by the first subsystem. The message may be transmitted further to a third subsystem comprising at least one element capable of interpreting the information carried by the object. The third subsystem may be based on substantially similar operational principles than the first subsystem.

The communication system may comprise at least a first terminal and a second terminal, the first terminal belonging to the first subsystem, and wherein a connection between the two terminals is negotiated based on a quality of service mechanism for packet data. The control message may comprise a resource reservation protocol message. The object may contain at least one quality of service parameter that is required by the first subsystem for connection set-up purposes.

According to another aspect there is provided a communication system comprising a first subsystem comprising a first plurality of elements, a second subsystem comprising a second plurality of elements, the second subsystem comprising a data network that is based on a packet switched communication protocol that is different from the communication protocol used by the first subsystem, a controller for generating a control message that can be interpreted by at least one element of the first subsystem and at least one element of the second subsystem, and a controller for adding to the control message an object containing control information, wherein the arrangement is such that operation of at least one element of the communication subsystem is controlled based on the control information contained in the object.

According to another aspect there is provided an apparatus comprising means for generating a control message, where the control message can be interpreted by at least one element of a first network and at least one element of a second network of a communication system, means for adding to the control message an object containing control information for controlling the operation of at least one element of the communication system, and means for transmitting the control message.

According to yet another aspect there is provided an apparatus comprising means for receiving a control message, the control message being such that it can be interpreted by at least one element of a first network and at least one element of a second network of a communication system, means for processing the control message, and means for interpreting an object included in the control message, the object containing further control information for controlling the operation of the apparatus.

The embodiments of the invention may improve interworking between the various functions, such as protocols and mechanisms. For example, interworking of the Resource Reservation Protocol RSVP and packet data QoS mechanisms of a packet switched service such as the Universal Mobile Telecommunication System UMTS or the General Packet Radio Service GPRS may be improved. In a more specific embodiment, the interworking between two UMTS/GPRS networks may be improved since it provides a possibility for an end-to-end signalling between UMTS networks based on RSVP messages.

### Brief Description of Drawings

For better understanding of the present invention, reference will now be made by way of example to the accompanying drawings in which:
Figure 1 shows a communication system where the embodiments of the present invention may be used; and

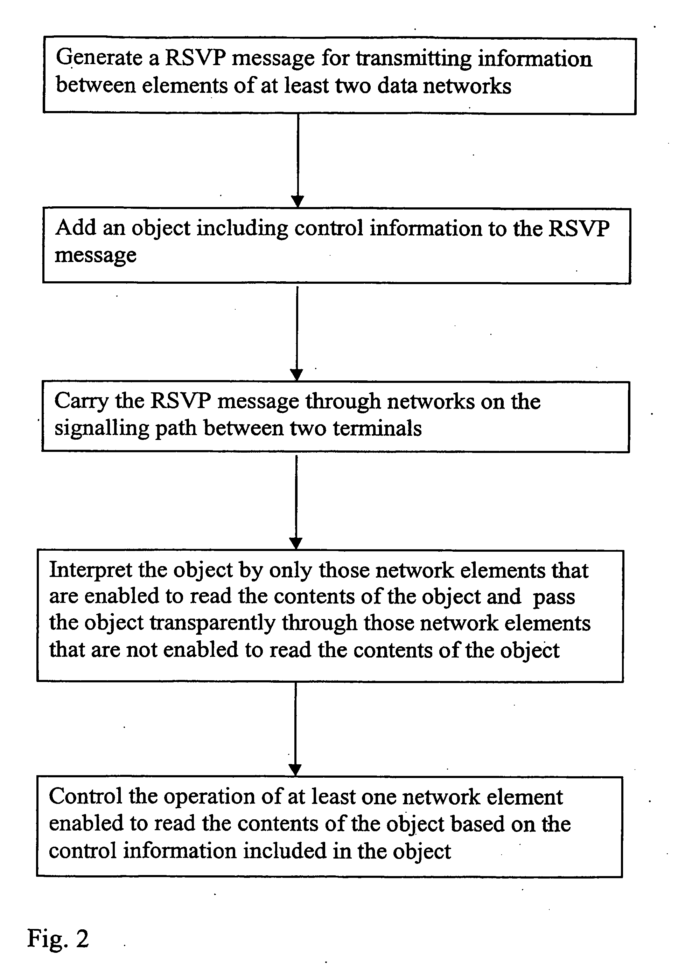

Figure 2 is a flowchart illustrating the operation of one embodiment of the present invention.

### Description of Preferred Embodiments of the Invention

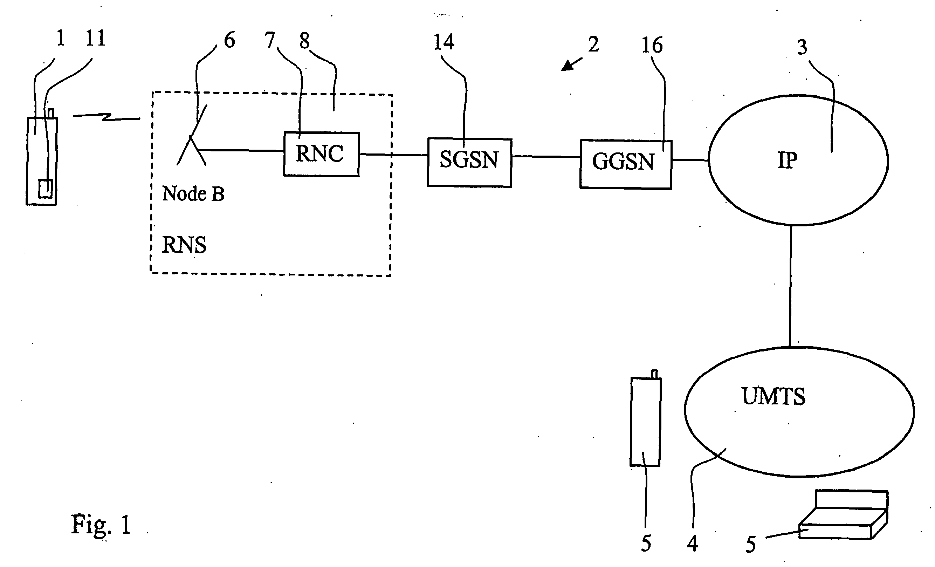

Reference is made to Figure 1 which shows a communication system in which the embodiments of the present invention may be employed. The area covered by the communication system is divided into a plurality of cells (not shown). Each cell has associated therewith a base station 6. Depending on the standard being used by the network, the base station is sometimes referred to as node B, for example in the third generation standards. The term base station will be used in this document to encompass all elements which transmit to mobile stations 1 or the like via the air interface. The mobile stations 1 or other user equipment is arranged to communicate with the respective base station. The mobile station 1 may be associated with terminal equipment 11, as will be explained later.

The embodiment of the invention is described in the context of a UMTS (Universal Mobile Telecommunications System) and a GPRS (General Packet radio Service) and communications involving packet data. However, it should be appreciated that embodiments of the present invention are applicable to any other communication system which deals with packet data, non-packet data or even voice communication or the like, such as the IMT 2000, wireless LAN or different access networks.

The elements of a UMTS network system 2 will now be discussed in more detail. The mobile station or user equipment 1 is arranged to communicate via the air interface with a respective base station 6. The base station is controlled by a radio network controller RNC 7. The radio network controller RNC and the base station may sometimes be referred to as the radio network subsystem RNS 8 or radio access network RAN. It should be appreciated that a UMTS network is typically provided with more than one RNC, and that each radio network controller is arranged generally to control more than one base station 6 although only one base station is shown in Figure 1. The elements of the RNS can be included in either or both of the RNC and the base station. This is an implementation issue.

The radio network subsystem 8 may be connected to a SGSN (serving GPRS support node) 14. The SGSN 14 keeps track of the mobile station's location and performs security functions and access control. The functions of the SGSN are defined e.g. in the 3GPP specification 33.060. The SGSN 14 is connected to a GGSN (gateway GPRS support node) 16. The GGSN 16 provides interworking with external packet switched networks, i.e. the GGSN acts as a gateway between the UMTS data network 2 and an external network 3, such as an IP based data network. The functions of a typical GGSN are also defined in the 3GPP specification.

Figure 1 shows further a second UMTS network 4. The second UMTS network may be of a substantially similar design than the first UMTS network 2.

Although not shown, the network system 2 may also be connected to conventional telecommunication networks, such as to a GSM based cellular public land mobile network (PLMN) or to a public switched telephone network (PSTN). The various networks may be interconnected to each other via appropriate interfaces and/or gateways.

The following describes an embodiment for improving interworking between the Resource Reservation Protocol RSVP and packet data QoS mechanisms of the Universal Mobile Telecommunication System UMTS and/or the General Packet Radio Service GPRS. The application of RSVP for carrying UMTS QoS parameters by defining a new RSVP object which can be interpreted by UMTS network elements while the object is carried transparently through other networks or links between two UMTS networks such that the element of the other networks or links are not aware of this additional object of the RSVP message. The described embodiments may be applied for UMTS networks as well as GPRS networks and any hybrids thereof.

A feature of the RSVP protocol is that it is modular. A RSVP message consists of a pre-defined set of objects, where the object type is indicated by the Class-Num octet in the header of each object. If an RSVP process in a network element encounters an unknown object while it processes an RSVP message, there are alternative possibilities for how to process this object and the whole message, based on the two high-order bits in the object's Class-Num octet. For example, if:
- Class-Num = 0bbbbbbb
   => the entire message containing this object is rejected and an error message is generated;
- Class-Num = 10bbbbbb
   => the network element ignores the object and does not forward it and no error message is generated;
- Class-Num = 11bbbbbb
   => the network element ignores the object but forwards the object in all messages resulting from the processed message.

The last mentioned alternative may thus be used for the extension of the RSVP protocol with network-specific objects. In principle, it is possible to add any desired information into these objects. It is thus possible to have objects that only apply for e.g. for the GGSN of a network, and/or objects which only apply e.g. for the mobile station MS. The added objects may be carried transparently through other networks and/or elements that are based on different standards, specifications or settings. That is, the forwarding of the RSVP messages is not affected in any way by such an added object in networks which are not able to interpret it. All those network elements or nodes that are not able to interpret the object will still be able to interpret the rest of the RSVP message.

In accordance with an embodiment of the present invention, a previously undefined RSVP object (referred to in the following as "UMTS QoS Object") with a Class-Num octet which matches the mask "11bbbbbb" is adapted to carry UMTS QoS (Quality of Service) information. The RSVP object may carry all UMTS QoS parameters which are defined e.g. in the above referred 3GPP Technical specification "QoS Concept and Architecture". The RSVP object may also carry only a subset of these parameters.
The RSVP object may also carry QoS information which is currently not contained in the RSVP QoS parameters and which can be used to determine all the UMTS QoS parameters or a subset of these parameters.

The UMTS QoS information can be used by the network elements within the UMTS network 2 (the elements include the mobile station 1 as well as attached terminal equipment) to extend the information contained especially in the PATH messages. The UMTS QoS information can also be used in other RSVP messages to provide the UMTS network 2 with additional QoS information. The additional information is not included in conventional RSVP messages. The network elements can be adapted to use the information contained in the UMTS QoS object to avoid mapping inconsistencies between the RSVP QoS parameters and the UMTS QoS parameters. The UMTS QoS information can also be used to enable the transfer of UMTS QoS information between two remote end points or two UMTS networks within RSVP messages.

The use of UMTS QoS information requires that there are network elements within the UMTS network 2 which are able to generate this information and that there are elements within the UMTS network 2, the receiving UMTS network or other data network which are able to process and use this information as described above.

According to an alternative embodiment, a Class-Num octet may be used which matches the above described second possible mask "10bbbbbb" to avoid possible interference with proprietary solutions in other access networks. That is, the object is not forwarded from the particular element interpreting the message and the object and thus the object cannot cause interference. However, the interference problem can also be avoided by standardizing the Class-Num for the UMTS QoS Object within the appropriate instances.

The additional object within the RSVP message may be interpreted internally within one UMTS network but not in end-to-end QoS negotiation (e.g. it could be stripped from outgoing RSVP messages by the GGSN 16 or any other appropriate element). The object can also be used in the end-to-end QoS negotiation between two UMTS networks so that a terminal in a UMTS network can be informed about the exact UMTS QoS requirements of a terminal in another UMTS network.

The first network element (including the terminal equipment 11 and/or the mobile station 1) in the UMTS network 2 which processes an RSVP message and which is able to perform a mapping between RSVP and UMTS QoS parameters is preferably used for the mapping and adding a UMTS QoS object to the forwarded RSVP message containing the resulting parameters. This object may also be added by the application that requests for the QoS. A possibility is to add the object by drivers or utilities within the terminal equipment 11. The user may control the terminal equipment 11, e.g. by means of the user interface (typically keypad) of the mobile station 1.

The UMTS QoS Object could be added to a RSVP message in an application running in the terminal equipment 11 which is integrated or attached to the mobile station 1. The application is both RSVP-aware and aware of the UMTS access network 8. In other words, the application is able to signal a RSVP message, is aware of the fact that the UE is attached to a UMTS network and knows the UMTS QoS (i.e. is enabled to add the UMTS QoS object to the RSVP message). The adding of the object may also occur in drivers or other utility applications running in the terminal equipment. A mobile station which is RSVP-aware may also be used. When the object is added at the user equipment or any other unit that is controllable by the user, the user is facilitated with a direct control over the UMTS QoS parameters transmitted to the network. This may be an advantage, since the user typically has the best or first hand knowledge of the type of the traffic that is to be transmitted (e.g. video data or speech data).

The UMTS QoS parameters may also be determined in a mapping procedure from the RSVP QoS parameters by a network element of the UMTS network 2. The network element may not be under the user's direct control. For example, a UMTS QoS Object may also be added to a RSVP message by the GGSN 16 upon receipt of an RSVP message. This allows for the signaling of UMTS QoS requirements to remote endpoints. It also allows signaling by a separate network element within the UMTS network which is responsible for QoS negotiation (e.g. bandwidth broker, etc.).

It should be appreciated that the UMTS QoS Object could be added to RSVP messages in several other locations as well and that the above examples do not exclude these.

The terminal equipment may be an external device such as a laptop computer which is attached to the mobile station 1.

The UMTS QoS object may be interpreted in several elements of the communication system depending the application. It should be appreciated that the following list of the possible network elements is not indented to be complete.

The interpretation may be accomplished in an RSVP aware mobile station 5 which receives an RSVP message from attached terminal equipment to trigger a PDP context activation procedure with the QoS parameters contained in the RSVP message. The interpretation may also be accomplished in an RSVP aware mobile station 5 which receives an RSVP message from a remote terminal which is implemented either in a UMTS-network or which is capable of adding a UMTS QoS Object to RSVP messages to trigger a PDP context activation procedure with the QoS parameters contained in the RSVP message.

A possible node for interpretation is a GGSN node which receives incoming or outgoing RSVP messages and which may have to trigger PDP context activation procedures based on these messages, perform admission control or map RSVP QoS parameters to UMTS QoS parameters.

In the embodiments the RSVP or any similar protocol providing a possibility to add one or more objects therein may be employed for carrying UMTS QoS parameters or one or more other parameters required by the network by defining a new object into the message. The added object can be interpreted by the elements of the particular network the one or more parameters are indented for while the object can be carried transparently through networks which do not base the operation thereof on the one or more parameters. The object may be added to the message such that the other networks may not even become aware of this additional part of the message. The addition of a UMTS QoS Object to RSVP messages allows applications, drivers or user-controlled utility applications which are aware of both RSVP and UMTS QoS to take full control of the UMTS QoS instead of leaving the mapping between RSVP QoS parameters and UMTS QoS parameters to other network elements.

The QoS requirements signaled by the RSVP messages can be split up in QoS requirements for the access network (contained in the UMTS QoS Object) and end-to-end QoS requirements (contained in the SENDER_TSPEC and FLOWSPEC objects).

RSVP messages containing the UMTS QoS Object can be transferred transparently through one or more external data networks, such as TCP/IP Internet and/or X.25 networks, no matter if these networks are aware of the RSVP modification or not. RSVP messages containing the UMTS QoS Object will neither be discarded nor cause error messages in network nodes which are not able to interpret this object. This allows for the signaling of QoS requirements between terminals in two UMTS networks.

The added object can be implemented as an optional feature. If a communication application is not able to create this object, it may be created e.g. by an RSVP-aware MT or by the GGSN. This allows for high flexibility (e.g. the operator may want to configure network elements to ignore or override the object) and even for proprietary implementations without causing any interworking problems with "traditional" RSVP.

According to a further embodiment the RSVP message is used for signaling the quality of service QoS communication between two data networks providing wireless services for the users thereof. The required QoS information is transmitted in the object, and no other QoS signaling is required.

It should be appreciated that whilst embodiments of the present invention have been described in relation to UMTS and GPRS networks and RSVP messages, embodiments of the present invention are applicable to any other suitable type of networks and protocols.

In an embodiment the communication between two data networks is not transmitted via a third network that is located between said two networks, but the subsystem between the two networks comprises an appropriate link or gateway. This type of embodiment is provided, for example, when the IP network 3 of Figure 1 is replaced by an appropriate link between the UMTS networks 2 and 4. An arrangement where the elements of the link between the two data networks may not be enabled to interpret the message is also possible. Correspondingly, the arrangement may be such that elements of a network between the two data networks may not be provided with means for interpreting any part of the message. According to a further embodiment the elements of a data network are divided in at least two subgroups such that the first group may interpret an object that is transparent for the second subgroup.

The data is described as being in packet form. In alternative embodiments of the invention the data may be sent in any suitable format.

It is also noted herein that while the above describes exemplifying embodiments of the invention, there are several variations and modifications which may be made to the disclosed solution without departing from the scope of the present invention as defined in the appended claims.

## Claims

1. A method for a communication system comprising:
generating a control message that can be interpreted by at least one element of a first subsystem (2) and at least one element of a second subsystem (3);
transmitting the control message via the first (2) and second (3) subsystems;
the method **characterised by**:
adding to the control message an object containing control information that is transparent for the elements of the second subsystem;
controlling the operation of at least one element of the communication system based on the control information contained in the object, wherein the second subsystem (3) comprises a data network that is based on a communication protocol that is different from the communication protocol used by the first subsystem (2) and wherein the communication system comprises the first (2) and second subsystems (3).

2. A method as claimed in claim 1, wherein the first subsystem (2) comprises a wireless network.

3. A method as claimed in claim 1 or 2, wherein the first subsystem (2) is based on a universal mobile telephone system and/or a general packet radio service.

4. A method as claimed in any preceding claim, wherein the second subsystem (3) is an internet protocol based data network.

5. A method as claimed in any preceding claim, wherein the message is transmitted further to a third subsystem (4).

6. A method as claimed in claim 5, wherein the third subsystem (4) is based on the same operational principles as the first subsystem (2).

7. A method as claimed in claim 5 or 6, wherein the object is interpreted in an element of the third subsystem (4).

8. A method as claimed in any preceding claim, wherein the communication system comprises at least a first terminal (1) and a second terminal (5), the first terminal (1) belonging to the first subsystem (2), and wherein a connection between the two terminals is negotiated based on a quality of service mechanism for packet data.

9. A method as claimed in claim 8, wherein the second terminal (5) belongs to a third subsystem (4).

10. A method as claimed in any preceding claim, wherein the control message comprises a resource reservation protocol message.

11. A method as claimed in any preceding claim, wherein the object contains at least one quality of service parameter that is required for connection purposes.

12. A method as claimed in claim 11, wherein the object carries all parameters required for the connection.

13. A method as claimed in claim 11, wherein the object carries a subset of parameters required for the connection.

14. A method as claimed in any preceding claim, comprising determining quality of service information based on information carried by the object.

15. A method as claimed in any preceding claim, comprising determining additional quality of service information based on the information carried by the object, and using the additional information for avoiding inconsistencies between the quality of services parameters of different communication networks.

16. A method as claimed in any preceding claim, wherein the networks elements of the second subsystem (3) ignore the object and forward the object in all messages that result from processing of the control message.

17. A method as claimed in any preceding claim, wherein the object includes at least one bit instructing the element processing the control message whether the object should be ignored or not by the element.

18. A method as claimed in claim 17, wherein a high order bit is included in the class-number octet of the object.

19. A method as claimed in any preceding claim, wherein a network element reads the information content of the object and removes the object from the message before forwarding the message.

20. A method as claimed in any preceding claim, wherein a network element in the communication path generates the object and adds the object in the control message.

21. A method as claimed in claim 20, wherein the element comprises a mobile station (1).

22. A method as claimed in claim 20, wherein the element comprises an element of a radio access network (8) of the first subsystem.

23. A method as claimed in claim 20, wherein the element comprises a gateway node (16) between two different networks.

24. A method as claimed in claim 20, wherein the user of the network element is enabled to control the use of the objects.

25. A method as claimed in any preceding claim, wherein the object is interpreted in a terminal (5) that terminates the connection.

26. A method as claimed in any preceding claim, wherein the object is interpreted in a gateway node (16) between different networks.

27. A communication system comprising:
a first subsystem (2) comprising a first plurality of elements;
a second subsystem (3) comprising a second plurality of elements, the second subsystem (3) comprising a data network that is based on a communication protocol that is different from the communication protocol used by the first subsystem (2) ;
a controller for generating a control message that can be interpreted by at least one element of the first subsystem (2) and at least one element of the second subsystem (3); and
a controller for adding to the control message an object containing control information that is transparent for the elements of the second subsystem, wherein the arrangement is such that operation of at least one element of the communication system is controlled based on the control information contained in the object.

28. A communication system as claimed in claim 27, wherein the first subsystem (2) comprises a wireless network.

29. A communication system as claimed in claim 27 or 28, wherein the first subsystem (2) is based on universal mobile telephone system specifications and/or a general packet radio service specifications.

30. A communication system as claimed in any of claims 27 to 29, wherein the second subsystem (3) is a data network that is based on the Internet protocol.

31. A communication system as claimed in any of claims 27 to 30, wherein the first subsystem (2) comprises a first network and a second network, the message being transmitted from the first network to the second network via the second subsystem (3).

32. A communication system as claimed in claim 31, wherein the first and second networks are based on the same operational principles.

33. A communication system as claimed in any of claims 27 to 32, wherein the communication system comprises at least a first terminal (1) and a second terminal (5), the first terminal (1) belonging to the first subsystem (2), and wherein a connection between the two terminals is adapted to be negotiated based on a quality of service mechanism for packet data.

34. A communication system as claimed in any of claims 27 to 33, wherein the control message comprises a resource reservation protocol message.

35. A communication system as claimed in any of claims 27 to 34, wherein the object contains at least one quality of service parameter that is required by the first subsystem (2) for connection purposes.

36. A communication system as claimed in any of claims 27 to 35, wherein at least one element of the first subsystem (2) is configured to determine quality of service information based on information carried by the object.

37. A communication system as claimed in any of claims 27 to 36, wherein the networks elements of the second subsystem (3) are adapted to forward the object in all messages that result from processing of the control message.

38. A communication system as claimed in any of claims 27 to 37, wherein the object is generated in an element that is one of a mobile station (1), an element of a radio access network (8) of the first subsystem (2) and a gateway (16) between two different networks.

39. A communication system as claimed in any of claims 27 to 38, wherein at least one of a terminal that terminates the connection, an element (5) of a third subsystem (4), and a gateway between different networks is configured to interpret the object.

40. A communication system as claimed in claim 31, wherein the second subsystem (3) comprises a link between the first and the second networks.

41. An apparatus comprising:
means for generating a control message, where the control message can be interpreted by at least one element of a first subsystem (2) and at least one element of a second subsystem (3) of a communication system wherein the second subsystem (3) comprises a data network that is based on a communication protocol that is different from the communication protocol used by the first subsystem (2);
means for adding to the control message an object containing control information that is transparent for the elements of the second subsystem for controlling the operation of at least one element of the communication system; and
means for transmitting the control message.

42. An apparatus comprising:
means for receiving a control message, the control message being such that it can be interpreted by at least one element of a first subsystem (2) and at least one element of a second subsystem (3) of a communication system wherein the second subsystem (3) comprises a data network that is based on a communication protocol that is different from the communication protocol used by the first subsystem (2);
means for processing the control message; and
means for interpreting an object included in the control message, the object containing further control information for controlling the operation of the apparatus and the object being transparent for the elements of the second subsystem.

43. An apparatus as claimed in claim 41 or 42, wherein the control message comprises a resource reservation protocol message.

44. An apparatus as claimed in any of claims 41 to 43, wherein the object contains quality of service information.

45. An apparatus as claimed in any of claims 41 to 44, comprising a mobile station (1).

46. An apparatus as claimed in any of claims 41 to 44, comprising an element of the first subsystem (2).

47. An apparatus as claimed in any of claims 41 to 44, comprising a gateway (16).

48. An apparatus as claimed in claim 47, wherein the gateway (16) comprises a gateway general packet radio service support node.

49. An apparatus as claimed in any of claims 41 to 44, comprising an element of a radio access subsystem (8).

50. A computer program comprising program code means adapted, when run on a controller device, to perform the steps of:
adding to a control message, that can be interpreted by at least one element of a first subsystem (2) of a communication system and at least one element of a second subsystem (3) of the communication system, an object containing control information that is transparent for the elements of the second subsystem; wherein the control information in the object is adapted to control operation of at least one element of the communication system and wherein the second subsystem (3) comprises a data network that is based on a communication protocol that is different from the communication protocol used by the first subsystem (2).

## Patentansprüche

1. Verfahren für ein Kommunikationssystem umfassend:
Erzeugen einer Steuermeldung, die von mindestens einem Element eines ersten Teilsystems (2) und von mindestens einem Element eines zweiten Teilsystems (3) interpretiert werden kann;
Übertragen der Steuermeldung über das erste (2) und zweite (3) Teilsystem;
wobei das Verfahren **gekennzeichnet ist durch**:
Hinzufügen eines Objekts zu der Steuermeldung, das Steuerinformation enthält, die für die Elemente des zweiten Teilsystems transparent ist;
Steuern des Betriebs von mindestens einem Element des Kommunikationssystems basierend auf der Steuerinformation, die in dem Objekt enthalten ist, wobei das zweite Teilsystem (3) ein Datennetz umfasst, das auf einem Kommunikationsprotokoll basiert, das sich von dem Kommunikationsprotokoll unterscheidet, das von dem ersten Teilsystem (2) verwendet wird, und wobei das Kommunikationssystem das erste (2) und zweite (3) Teilsystem umfasst.

2. Verfahren, wie in Anspruch 1 beansprucht, wobei das erste Teilsystem (2) ein kabelloses Netz umfasst.

3. Verfahren, wie in Anspruch 1 oder 2 beansprucht, wobei das erste Teilsystem (2) auf einem universalen mobilen Telefonsystem und/oder einem allgemeinen Paket-Funkdienst basiert.

4. Verfahren, wie in einem der vorangehenden Ansprüche beansprucht, wobei das zweite Teilsystem (3) ein Internet-Protokoll basiertes Datennetz ist.

5. Verfahren, wie in einem der vorangehenden Ansprüche beansprucht, wobei die Meldung zu einem dritten Teilsystem (4) weiterübermittelt wird.

6. Verfahren, wie in Anspruch 5 beansprucht, wobei das dritte Teilsystem (4) auf den gleichen Betriebsprinzipien wie das erste Teilsystem (2) basiert.

7. Verfahren, wie in Anspruch 5 oder Anspruch 6 beansprucht, wobei das Objekt in einem Element des dritten Teilsystems (4) interpretiert wird.

8. Verfahren, wie in einem der vorangehenden Ansprüche beansprucht, wobei das Kommunikationssystem mindestens ein erstes Endgerät (1) und ein zweites Endgerät (5) umfasst, wobei das erste Endgerät (1) zu dem ersten Teilsystem (2) gehört, und wobei eine Verbindung zwischen den beiden Endgeräten basierend auf einem Dienstgütemechanismus für Paketdaten ausgehandelt wird.

9. Verfahren, wie in Anspruch 8 beansprucht, wobei das zweite Endgerät (5) zu einem dritten Teilsystem (4) gehört.

10. Verfahren, wie in einem der vorangehenden Ansprüche beansprucht, wobei die Steuermeldung eine Ressource-Reservierungs-Protokoll-Meldung umfasst.

11. Verfahren, wie in einem der vorangehenden Ansprüche beansprucht, wobei das Objekt mindestens ein Dienstgüteparameter enthält, der für Verbindungszwecke benötigt wird.

12. Verfahren, wie in Anspruch 11 beansprucht, wobei das Objekt alle Parameter trägt, die für die Verbindung benötigt werden.

13. Verfahren, wie in Anspruch 11 beansprucht, wobei das Objekt eine Teilgruppe von Parametern trägt, die für die Verbindung benötigt werden.

14. Verfahren, wie in einem der vorangehenden Ansprüche beansprucht, umfassend das Bestimmen der Dienstgüteinformation basierend auf der Information, die das Objekt trägt.

15. Verfahren, wie in einem der vorangehenden Ansprüche beansprucht, umfassend das Bestimmen zusätzlicher Dienstgüteinformation basierend auf der Information, die das Objekt trägt, und Verwendung der zusätzlichen Information zum Vermeiden von Widersprüchen zwischen den Dienstgüteparametern von verschiedenen Kommunikationsnetzen.

16. Verfahren, wie in einem der vorangehenden Ansprüche beansprucht, wobei die Netzelemente des zweiten Teilsystems (3) das Objekt ignorieren und das Objekt in allen Meldungen weiterleiten, die aus der Verarbeitung der Steuermeldung hervorgehen.

17. Verfahren, wie in einem der vorangehenden Ansprüche beansprucht, wobei das Objekt mindestens ein Bit beinhaltet, das das Element anweist, das die Steuermeldung verarbeitet, ob das Objekt von dem Element ignoriert werden soll oder nicht.

18. Verfahren, wie in Anspruch 17 beansprucht, wobei ein Bit höherer Ordnung in das Klassennummer-Oktett des Objekts eingeschlossen wird.

19. Verfahren, wie in einem der vorangehenden Ansprüche beansprucht, wobei ein Netzelement den Informationsinhalt des Objekts liest und das Objekt aus der Meldung löscht, bevor es die Meldung weiterleitet.

20. Verfahren, wie in einem der vorangehenden Ansprüche beansprucht, wobei ein Netzelement in dem Kommunikationspfad das Objekt erzeugt und das Objekt der Steuermeldung hinzufügt.

21. Verfahren, wie in Anspruch 20 beansprucht, wobei das Element eine Mobilstation (1) umfasst.

22. Verfahren, wie in Anspruch 20 beansprucht, wobei das Element ein Element eines Funkzugangsnetzes (8) des ersten Teilsystems umfasst.

23. Verfahren, wie in Anspruch 20 beansprucht, wobei das Element einen Gateway-Knoten (16) zwischen zwei verschiedenen Netzen umfasst.

24. Verfahren, wie in Anspruch 20 beansprucht, wobei der Nutzer des Netzelements berechtigt ist, die Benutzung des Objekts zu steuern.

25. Verfahren, wie in einem der vorangehenden Ansprüche beansprucht, wobei das Objekt in einem Endgerät (5) interpretiert wird, das die Verbindung abschließt.

26. Verfahren, wie in einem der vorangehenden Ansprüche beansprucht, wobei das Objekt in einem Gateway-Knoten (16) zwischen verschiedenen Netzen interpretiert wird.

27. Kommunikationssystem umfassend:
ein erstes Teilsystem (2) umfassend eine erste Vielzahl von Elementen;
ein zweites Teilsystem (3) umfassend eine zweite Vielzahl von Elementen, wobei das zweite Teilsystem (3) ein Datennetz umfasst, das auf einem Kommunikationsprotokoll basiert, das sich von dem Kommunikationsprotokoll unterscheidet, das von dem ersten Teilsystem (2) verwendet wird;
eine Steuereinheit zum Erzeugen einer Steuermeldung, die von mindestens einem Element des ersten Teilsystems (2) und mindestens einem Element des zweiten Teilsystems (3) interpretiert werden kann; und
eine Steuereinheit zum Hinzufügen eines Objektes zu der Steuermeldung, das Steuerinformation enthält, die für die Elemente des zweiten Teilsystems transparent ist, wobei die Anordnung derart ist, dass der Betrieb von mindestens einem Element des Kommunikationssystems basierend auf der Steuerinformation gesteuert wird, die in dem Objekt enthalten ist.

28. Kommunikationssystem, wie in Anspruch 27 beansprucht, wobei das erste Teilsystem (2) ein drahtloses Netz umfasst.

29. Kommunikationssystem, wie in Anspruch 27 oder Anspruch 28 beansprucht, wobei das erste Teilsystem (2) auf den universalen Mobilfunk-Spezifikationen und/oder auf allgemeinen Paket-Funkdienst-Spezifikationen basiert.

30. Kommunikationssystem, wie in einem der Ansprüche 27 bis 29 beansprucht, wobei das zweite Teilsystem (3) ein Datennetz ist, das auf dem Internetprotokoll basiert.

31. Kommunikationssystem, wie in einem der Ansprüche 27 bis 30 beansprucht, wobei das erste Teilsystem (2) ein erstes Netz und ein zweites Netz umfasst, wobei die Meldung von dem ersten Netz zu dem zweiten Netz über das zweite Teilsystem (3) übermittelt wird.

32. Kommunikationssystem, wie in Anspruch 31 beansprucht, wobei das erste und das zweite Netz auf den gleichen Betriebsprinzipien basieren.

33. Kommunikationssystem, wie in einem der Ansprüche 27 bis 32 beansprucht, wobei das Kommunikationssystem mindestens ein erstes Endgerät (1) und ein zweites Endgerät (5) umfasst, wobei das erste Endgerät (1) zu dem ersten Teilsystem (2) gehört, und wobei eine Verbindung zwischen den beiden Endgeräten angepasst ist, um basierend auf einem Dienstgütemechanismus für Paketdaten ausgehandelt zu werden.

34. Kommunikationssystem, wie in einem der Ansprüche 27 bis 33 beansprucht, wobei die Steuermeldung eine Ressource-Reservierungs-Protokoll-Meldung umfasst.

35. Kommunikationssystem, wie in einem der Ansprüche 27 bis 34 beansprucht, wobei das Objekt mindestens einen Dienstgüteparameter enthält, der von dem ersten Teilsystem (2) für Verbindungszwecke benötigt wird.

36. Kommunikationssystem, wie in einem der Ansprüche 27 bis 35 beansprucht, wobei mindestens ein Element des ersten Teilsystems (2) eingerichtet ist, um Dienstgüteinformation basierend auf der Information zu bestimmen, die vom Objekt getragen wird.

37. Kommunikationssystem, wie in einem der Ansprüche 27 bis 36 beansprucht, wobei die Netzelemente des zweiten Teilsystems (3) angepasst sind, um das Objekt in allen Meldungen weiterzuleiten, die aus der Verarbeitung der Steuermeldung hervorgehen.

38. Kommunikationssystem, wie in einem der Ansprüche 27 bis 37 beansprucht, wobei das Objekt in einem Element erzeugt wird, das eine Mobilstation (1), ein Element eines Funkzugangnetzes (8) des ersten Teilsystems (2) und einem Gateway (16) zwischen zwei verschiedenen Netzen ist.

39. Kommunikationssystem, wie in einem der Ansprüche 27 bis 38 beansprucht, wobei mindestens ein Endgerät, das die Verbindung abschließt, ein Element (5) eines dritten Teilsystems (4) und einem Gateway zwischen verschiedenen Netzen eingerichtet ist, um das Objekt zu interpretieren.

40. Kommunikationssystem, wie in Anspruch 31 beansprucht, wobei das zweite Teilsystem (3) einen Link zwischen dem ersten und dem zweiten Netz umfasst.

41. Vorrichtung, umfassend:
Mittel zum Erzeugen einer Steuermeldung, wobei die Steuermeldung von mindestens einem Element eines ersten Teilsystems (2) und mindestens einem Element eines zweiten Teilsystems (3) eines Kommunikationssystems interpretiert werden kann, wobei das zweite Teilsystem (3) ein Datennetz umfasst, das auf einem Kommunikationsprotokoll basiert, das sich von dem Kommunikationsprotokoll unterscheidet, das von dem ersten Teilsystem (2) verwendet wird;
Mittel zum Hinzufügen eines Objektes zu der Steuermeldung, das Steuerinformation enthält, die für die Elemente des zweiten Teilsystems zum Steuern des Betriebs mindestens eines Elements des Kommunikationssystems transparent sind; und
Mittel zum Übertragen der Steuermeldung.

42. Vorrichtung, umfassend:
Mittel zum Empfangen einer Steuermeldung, wobei die Steuermeldung derart ist, dass sie von mindestens einem Element eines ersten Teilsystems (2) und mindestens von einem Element eines zweiten Teilsystems (3) eines Kommunikationssystems interpretiert werden kann, wobei das zweite Teilsystem (3) ein Datennetz umfasst, das auf einem Kommunikationsprotokoll basiert, das sich von dem Kommunikationsprotokoll unterscheidet, das von dem ersten Teilsystem (2) verwendet wird;
Mittel, zum Bearbeiten der Steuermeldung; und
Mittel, zum Interpretieren eines Objekts, das in der Steuermeldung eingeschlossen ist, wobei das Objekt weiter Steuerinformation zum Steuern des Betriebs der Vorrichtung enthält, und wobei das Objekt für die Elemente des zweiten Teilsystems transparent ist.

43. Vorrichtung, wie in Anspruch 41 oder 42 beansprucht, wobei die Steuermeldung eine Ressourcen-Reservierungs-Protokoll-Meldung umfasst.

44. Vorrichtung, wie in einem der Ansprüche 41 bis 43 beansprucht, wobei das Objekt eine Dienstgüteinformation enthält.

45. Vorrichtung, wie in einem der Ansprüche 41 bis 44 beansprucht, umfassend eine Mobilstation (1).

46. Vorrichtung, wie in einem der Ansprüche 41 bis 44 beansprucht, umfassend ein Element des ersten Teilsystems (2).

47. Vorrichtung, wie in einem der Ansprüche 41 bis 44 beansprucht, umfassend einen Gateway (16).

48. Vorrichtung, wie in Anspruch 47 beansprucht, wobei der Gateway (16) einen Gateway-Unterstützungsknoten eines allgemeinen Paket-Funkdienstes (Gateway General Packet Radio Service Support Node) umfasst.

49. Vorrichtung, wie in einem der Ansprüche 41 bis 44 beansprucht, umfassend ein Element eines Funkzugangsteilsystems (8).

50. Computerprogramm, umfassend Programmcode-Mittel, angepasst, wenn das Programm auf einem Computer ausgeführt wird, um die Schritte auszuführen:
Hinzufügen eines Objektes zu der Steuermeldung, die von mindestens einem Element eines ersten Teilsystems (2) eines Kommunikationssystems und mindestens einem Element eines zweiten Teilsystems (3) des Kommunikationssystems interpretiert werden kann, das Steuerinformation enthält, die für die Elemente des zweiten Teilsystems transparent ist, wobei die Steuerinformation in dem Objekt zum Steuern des Betriebs von mindestens einem Element des Kommunikationssystems angepasst ist, und wobei das zweite Teilsystem (3) ein Datennetz umfasst, das auf einem Kommunikationsprotokoll basiert, das sich von dem Kommunikationsprotokoll unterscheidet, das von dem ersten Teilsystem (2) verwendet wird.

## Revendications

1. Procédé pour un système de communication comprenant les étapes consistant à :
générer un message de commande qui peut être interprété par au moins un élément d'un premier sous-système (2) et au moins un élément d'un second sous-système (3) ;
transmettre le message de commande via les premier (2) et second (3) sous-systèmes ;
le procédé étant **caractérisé par** les étapes consistant à :
ajouter au message de commande un objet contenant des informations de commande qui est transparent pour les éléments du second sous-système ;
commander le fonctionnement d'au moins un élément du système de communication en se basant sur les informations de commande contenues dans l'objet, où le second sous-système (3) comprend un réseau de données qui est basé sur un protocole de communication qui est différent du protocole de communication utilisé par le premier sous-système (2), et dans lequel le système de communication comprend les premier (2) et second (3) sous-systèmes.

2. Procédé tel que revendiqué dans la revendication 1, dans lequel le premier sous-système (2) comprend un réseau sans fil.

3. Procédé tel que revendiqué dans la revendication 1 ou 2, dans lequel le premier sous-système (2) est basé sur un système universel de télécommunication avec les mobiles (UMTS) et/ou un service général de radiocommunication en mode paquet (GPRS).

4. Procédé tel que revendiqué dans l'une quelconque des revendications précédentes, dans lequel le second sous-système (3) est un réseau de données basé sur le protocole Internet.

5. Procédé tel que revendiqué dans l'une quelconque des revendications précédentes, dans lequel le message est en outre transmis à un troisième sous-système (4).

6. Procédé tel que revendiqué dans la revendication 5, dans lequel le troisième sous-système (4) est basé sur les mêmes principes opérationnels que le premier sous-système (2).

7. Procédé tel que revendiqué dans la revendication 5 ou 6, dans lequel l'objet est interprété dans un élément du troisième sous-système (4).

8. Procédé tel que revendiqué dans l'une quelconque des revendications précédentes, dans lequel le système de communication comprend au moins un premier terminal (1) et un second terminal (5), le premier terminal (1) appartenant au premier sous-système (2), et dans lequel une connexion entre les deux terminaux est négociée en se basant sur un mécanisme de qualité de service pour les données en paquets.

9. Procédé tel que revendiqué dans la revendication 8, dans lequel le second terminal (5) appartient à un troisième sous-système (4).

10. Procédé tel que revendiqué dans l'une quelconque des revendications précédentes, dans lequel le message de commande comprend un message de protocole de réservation de ressource.

11. Procédé tel que revendiqué dans l'une quelconque des revendications précédentes, dans lequel l'objet contient au moins un paramètre de qualité de service qui est requis à des fins de connexion.

12. Procédé tel que revendiqué dans la revendication 11, dans lequel l'objet transporte tous les paramètres requis pour la connexion.

13. Procédé tel que revendiqué dans la revendication 11, dans lequel l'objet transporte un sous-ensemble de paramètres requis pour la connexion.

14. Procédé tel que revendiqué dans l'une quelconque des revendications précédentes, comprenant l'étape consistant à déterminer des informations de qualité de service en se basant sur des informations transportées par l'objet.

15. Procédé tel que revendiqué dans l'une quelconque des revendications précédentes, comprenant l'étape consistant à déterminer des informations de qualité de service supplémentaires en se basant sur les informations transportées par l'objet, et à utiliser les informations supplémentaires pour éviter les incohérences entre les paramètres de qualité de service des différents réseaux de communication.

16. Procédé tel que revendiqué dans l'une quelconque des revendications précédentes, dans lequel les éléments de réseau du second sous-système (3) ignorent l'objet et font suivre l'objet dans tous les messages qui résultent du traitement du message de commande.

17. Procédé tel que revendiqué dans l'une quelconque des revendications précédentes, dans lequel l'objet comprend au moins un bit donnant pour instruction à l'élément traitant le message de commande que l'objet doit être ignoré, ou ne doit pas être ignoré, par l'élément.

18. Procédé tel que revendiqué dans la revendication 17, dans lequel un bit d'ordre élevé est inclus dans l'octet de numéro de classe de l'objet.

19. Procédé tel que revendiqué dans l'une quelconque des revendications précédentes, dans lequel un élément de réseau lit le contenu des informations de l'objet et supprime l'objet du message avant de faire suivre le message.

20. Procédé tel que revendiqué dans l'une quelconque des revendications précédentes, dans lequel un élément de réseau du chemin de communication génère l'objet et ajoute l'objet dans le message de commande.

21. Procédé tel que revendiqué dans la revendication 20, dans lequel l'élément comprend une station mobile (1).

22. Procédé tel que revendiqué dans la revendication 20, dans lequel l'élément comprend un élément d'un réseau d'accès sans fil (8) du premier sous-système.

23. Procédé tel que revendiqué dans la revendication 20, dans lequel l'élément comprend un noeud passerelle (16) entre les deux différents réseaux.

24. Procédé tel que revendiqué dans la revendication 20, dans lequel l'utilisateur de l'élément de réseau est autorisé à commander l'utilisation des objets.

25. Procédé tel que revendiqué dans l'une quelconque des revendications précédentes, dans lequel l'objet est interprété dans un terminal (5) qui termine la connexion.

26. Procédé tel que revendiqué dans l'une quelconque des revendications précédentes, dans lequel l'objet est interprété dans un noeud passerelle (16) entre différents réseaux.

27. Système de communication comprenant :
un premier sous-système (2) comprenant une première pluralité d'éléments ;
un second sous-système (3) comprenant une seconde pluralité d'éléments, le second sous-système (3) comprenant un réseau de données qui est basé sur un protocole de communication qui est différent du protocole de communication utilisé par le premier sous-système (2) ;
un contrôleur pour générer un message de commande qui peut être interprété par au moins un élément du premier sous-système (2) et au moins un élément du second sous-système (3) ; et
un contrôleur pour ajouter au message de commande un objet contenant des informations de commande qui est transparent pour les éléments du second sous-système, dans lequel l'arrangement est tel que le fonctionnement d'au moins un élément du système de communication est commandé en se basant sur les informations de commande contenues dans l'objet.

28. Système de communication tel que revendiqué dans la revendication 27, dans lequel le premier sous-système (2) comprend un réseau sans fil.

29. Système de communication tel que revendiqué dans la revendication 27 ou 28, dans lequel le premier sous-système (2) est basé sur des spécifications de système universel de télécommunication avec les mobiles (UMTS) et/ou des spécifications de service général de radiocommunication en mode paquet (GPRS).

30. Système de communication tel que revendiqué dans l'une quelconque des revendications 27 à 29, dans lequel le second sous-système (3) est un réseau de données qui est basé sur le protocole Internet.

31. Système de communication tel que revendiqué dans l'une quelconque des revendications 27 à 30, dans lequel le premier sous-système (2) comprend un premier réseau et un second réseau, le message étant transmis du premier réseau au second réseau via le second sous-système (3).

32. Système de communication tel que revendiqué dans la revendication 31, dans lequel les premier et second réseaux sont basés sur les mêmes principes opérationnels.

33. Système de communication tel que revendiqué dans l'une quelconque des revendications 27 à 32, dans lequel le système de communication comprend au moins un premier terminal (1) et un second terminal (5), le premier terminal (1) appartenant au premier sous-système (2), et dans lequel une connexion entre les deux terminaux est adaptée pour être négociée en se basant sur un mécanisme de qualité de service pour les données en paquets.

34. Système de communication tel que revendiqué dans l'une quelconque des revendications 27 à 33, dans lequel le message de commande comprend un message de protocole de réservation de ressource.

35. Système de communication tel que revendiqué dans l'une quelconque des revendications 27 à 34, dans lequel l'objet contient au moins un paramètre de qualité de service qui est requis par le premier sous-système (2) à des fins de connexion.

36. Système de communication tel que revendiqué dans l'une quelconque des revendications 27 à 35, dans lequel au moins un élément du premier sous-système (2) est configuré pour déterminer des informations de qualité de service en se basant sur des informations transportées par l'objet.

37. Système de communication tel que revendiqué dans l'une quelconque des revendications 27 à 36, dans lequel les éléments de réseau du second sous-système (3) sont adaptés pour faire suivre l'objet dans tous les messages qui résultent du traitement du message de commande.

38. Système de communication tel que revendiqué dans l'une quelconque des revendications 27 à 37, dans lequel l'objet est généré dans un élément qui est un élément parmi une station mobile (1), un élément d'un réseau d'accès sans fil (8) du premier sous-système (2) et une passerelle (16) entre deux réseaux différents.

39. Système de communication tel que revendiqué dans l'une quelconque des revendications 27 à 38, dans lequel au moins un élément parmi un terminal qui termine la connexion, un élément (5) d'un troisième sous-système (4) et une passerelle entre différents réseaux est configuré pour interpréter l'objet.

40. Système de communication tel que revendiqué dans la revendication 31, dans lequel le second sous-système (3) comprend une liaison entre les premier et second réseaux.

41. Appareil comprenant :
des moyens pour générer un message de commande, où le message de commande peut être interprété par au moins un élément d'un premier sous-système (2) et au moins un élément d'un second sous-système (3) d'un système de communication, dans lequel le second sous-système (3) comprend un réseau de données qui est basé sur un protocole de communication qui est différent du protocole de communication utilisé par le premier sous-système (2) ;
des moyens pour ajouter au message de commande un objet contenant des informations de commande qui est transparent pour les éléments du second sous-système pour commander le fonctionnement d'au moins un élément du système de communication ; et
des moyens pour transmettre le message de commande.

42. Appareil comprenant :
des moyens pour recevoir un message de commande, le message de commande étant tel qu'il puisse être interprété par au moins un élément d'un premier sous-système (2) et au moins un élément d'un second sous-système (3) d'un système de communication, dans lequel le second sous-système (3) comprend un réseau de données qui est basé sur un protocole de communication qui est différent du protocole de communication utilisé par le premier sous-système (2) ;
des moyens pour traiter le message de commande ; et
des moyens pour interpréter un objet inclus dans le message de commande, l'objet contenant d'autres informations de commande pour commander le fonctionnement de l'appareil et l'objet étant transparent pour les éléments du second sous-système.

43. Appareil tel que revendiqué dans la revendication 41 ou 42, dans lequel le message de commande comprend un message de protocole de réservation de ressource.

44. Appareil tel que revendiqué dans l'une quelconque des revendications 41 à 43, dans lequel l'objet contient des informations de qualité de service.

45. Appareil tel que revendiqué dans l'une quelconque des revendications 41 à 44, comprenant une station mobile (1).

46. Appareil tel que revendiqué dans l'une quelconque des revendications 41 à 44, comprenant un élément du premier sous-système (2).

47. Appareil tel que revendiqué dans l'une quelconque des revendications 41 à 44, comprenant une passerelle (16).

48. Appareil tel que revendiqué dans la revendication 47, dans lequel la passerelle (16) comprend un noeud passerelle de support du service général de radiocommunication en mode paquet (GPRS).

49. Appareil tel que revendiqué dans l'une quelconque des revendications 41 à 44, comprenant un élément d'un sous-système d'accès radio (8).

50. Programme informatique comprenant des moyens de code de programme adaptés pour, lorsqu'ils sont exécutés sur un dispositif de commande, exécuter les étapes consistant à :
ajouter à un message de commande, qui peut être interprété par au moins un élément d'un premier sous-système (2) d'un système de communication et au moins un élément d'un second sous-système (3) du système de communication, un objet contenant des informations de commande qui est transparent pour les éléments du second sous-système ; dans lequel les informations de commande dans l'objet sont adaptées pour commander le fonctionnement d'au moins un élément du système de communication et dans lequel le second sous-système (3) comprend un réseau de données qui est basé sur un protocole de communication qui est différent du protocole de communication utilisé par le premier sous-système (2).
